Europäisches Patentamt

European Patent Office

Office européen des brevets

(11) Publication number: **0 427 446 A2**

## EUROPEAN PATENT APPLICATION

(21) Application number: 90311910.5

(22) Date of filing: 31.10.90

(51) Int. Cl.⁵: **C08J 3/03**, B01D 1/22, B01D 19/00, //C08L35:00

(30) Priority: 08.11.89 US 433258

(43) Date of publication of application:
15.05.91 Bulletin 91/20

(84) Designated Contracting States:
BE DE ES FR GB IT NL

(71) Applicant: **ARCO CHEMICAL TECHNOLOGY INC.**
**3 Christina Centre Suite 902 201 N Walnut Street**
**Wilmington Delaware 19801(US)**

(72) Inventor: **Gupta, Vijai P.**
**816 Newtown Road**
**Berwyn, Pennsylvania 19312(US)**

(74) Representative: **Cropp, John Anthony David et al**
**MATHYS & SQUIRE 10 Fleet Street**
**London, EC4Y 1AY(GB)**

(54) **Process for deaerating polymeric solutions.**

(57) Deaeration of aqueous polymeric solutions, particularly fiber-forming solutions, by thin film evaporation.

EP 0 427 446 A2

## PROCESS FOR DEAERATING POLYMERIC SOLUTIONS

BACKGROUND OF THE INVENTION

(1) Field of the Invention

This invention pertains to the processing of polymeric solutions in general and of aqueous polymeric solutions for fiber production in particular.

(2) Description of Related Art

The processing of polymers, whether natural or synthetic, into shaped articles, such as fibers, is often accomplished by the dissolution of the polymer in solution, followed by extrusion of the polymer solution with concomitant evaporation of the solvent, thus yielding the desired shaped article. These techniques typically involve highly concentrated and extremely viscous solutions which are not only difficult to transfer rapidly but are also susceptible to process-induced perturbations which have detrimental effects on subsequent processing and on final product properties.

A major process-induced perturbation is the introduction of air bubbles into the polymer solution during preparation or subsequent processing. The presence of the bubbles may result in filament breaks during extrusion and, consequently, often completely interrupts fiber extrusion from multihole spinnerets. Further, air bubbles may eventually appear as bubbles or voids in the final product thereby detracting from the aesthetic appeal as well as the physical properties of the product. The prior art has attempted to alleviate the problem by maintaining operating conditions, such as temperature, mixing speed, transfer rate, et al. at values at which void formation is minimal. Even with the most carefully managed system, though, it is inevitable that some void formation will occur. It is therefore typical in the art to resort to some form of deaeration to remove the undesired bubbles. The deaeration process may even be something as primitive as allowing the solution to remain quiescent for a time sufficient to permit the bubbles to escape.

There remains then a need for an efficient method for deaerating polymer solutions without affecting the processibility of the solution or detracting from the final product properties.

SUMMARY OF THE INVENTION

This invention provides a novel process for the deaeration of polymer solutions, particularly aqueous solutions of fiber-forming polymers. A polymer solution is prepared at a concentration lower than that desired for extrusion. The solution is transferred to a thin film evaporator in which the solvent begins to evaporate, thereby increasing the concentration of the solution. As the solvent evaporates, the vapors sweep whatever air bubbles are present in the solution out, thus providing a degassed, concentrated solution suitable for extrusion

DETAILED DESCRIPTION OF THE INVENTION

In the practice of this invention a solution of the polymer to be extruded is prepared in a suitable solvent by methods well known to those skilled in the art. Preferably the concentration of the polymer in the solution is several percent lower than that considered optimum for purposes of extrusion. The lower polymer concentration is reflected by lower solution viscosity. This lower viscosity greatly facilitates solution preparation and transfer. The solution is then transferred to a thin film evaporator maintained at a temperature sufficiently high to induce vaporization of the solvent As the solvent evaporates from the thin film of polymeric solution, optionally under vacuum, the solvent vapors sweep any air bubbles from the solution, thereby providing a bubble-free solution at a concentration suitable for extrusion.

It will be appreciated that while thin film techniques are preferred, the process of this invention may be conducted in batch solutions. A polymeric solution of less than target concentration is prepared in a suitable solvent. The solution is then heated under vacuum to a temperature at which substantial vaporization occurs and held at this temperature for a time sufficient to increase the polymer concentration to the target level. The evaporation of the solvent sweeps any air bubbles out the solution, resulting in a bubble-free extrudable solution.

A preferred embodiment of this invention is that in which the polymer is dissolved in water, with the deaeration process conducted at temperatures of about $70°$ C to $900°$ C under a pressure of about 300 to 500 mm Hg. As the water vapor escapes from the solution, any gas bubbles present are swept along when the solution is cooled, any water vapor bubbles remaining condense to provide a uniform, void-free solution.

An aqueous solution particularly suited for the practice of this invention is an aqueous composition of a copolymer and an unreacted compound, which upon extruding and curing forms a superabsorbent fiber.

Aqueous compositions to which this invention is applicable include, but are not limited to, those taught in the following United States patents, the teachings of which are incorporated by reference herein: U. S. 4,731,067; U. S. 4,788,237; U. S. 4,743,244; U. S. 4,705,773; U. S. 4,616,063; U. S. 4,813,945. Particularly suitable is an aqueous composition of a partially neutralized isobutylene/maleic anhydride copolymer

Typically, the concentration of the feed solution is from about 20% to about 45% polymer and the concentration of the degassed solution is from about 40% to about 60% polymer. In the practice of this invention, it will be recognized that a solution may only be concentrated by a small fraction, e.g. 1-2%, or may be doubled or tripled in concentration. Factors such as the level of aeration, target concentration, and desired throughput as well as the thermal stability of the polymer contribute to a determination of the overall concentration factor.

The void-free polymeric solution finds particular utility in the production of void-free fibers, such as Fibersorb® SA-7000 fiber from Arco Chemical Company, Newtown Square, Pa.

The following examples are meant to be illustrative of the invention and should not be construed as limiting the invention to less than that claimed.

EXAMPLE 1

A 40.7% solution of an isobutylene/maleic anhydride copolymer (Isobamo® Kuraray Isoprene Chemical Company, Ltd., Tokyo, Japan) and a crosslinking agent as taught in U. S. 4,731,067 was prepared in deionized water. The solution was opaque due to the presence of very fine bubbles.

This solution was pumped at a rate of 247.4 lbs/hr into a LUWA Thin Film Evaporator Type LN-0500. The solution was distributed evenly by the feed distribution ring onto the heated surface (113°C) of the evaporator where it was picked up by the rotor blades. The solution was constantly agitated by the rotor blades(550 rpm) while flowing down the heated surface. The vapors travel countercurrently to the solution. The concentrated solution was discharged with a positive displacement pump.

The solution feed temperature was 72°C, the vapor temperature was 78°C, and the bottoms temperature was 81°C. The operating pressure was 313 mm Hg. Residence time was 5 minutes.

The bottoms were taken off at 188.4 lbs/hr and contained 53.2% polymer. The bottoms were clear and free of bubbles.

EXAMPLE 2

The process of Example 1 was repeated using a feed rate of 317lb/hr, a rotor speed of 400 rpm, and an operating pressure of 307 mm Hg.

The feed temperature was 70°C, the vapor temperature was 77°C, and the bottoms temperature was 89°C. Residence time was 6 minutes.

The bottoms were taken off at 268 lb/hr and contained 48% polymer., The bottoms were clear and free of bubbles.

**Claims**

1. A process for preparing bubble-free aqueous solutions of water-soluble polymers, comprising:
   (a) preparing a solution of the polymer in water at a concentration less than that desired for extrusion;
   (b) heating said solution in a thin film evaporator to a temperature sufficient to vaporize at least some of the water;
   (c) maintaining said solution at said temperature for a time sufficient to vaporize an amount of water sufficient to deaerate and concentrate said solution to the desired concentration; and
   (d) discharging said concentrated, deaerated solution from the evaporator.

2. A process of claim 1 in which said thin film evaporator is a wiped or falling film evaporator.

3. A process of claim 1 or claim 2 which the heating is conducted under vacuum.

4. A process of any one of claims 1 to 3 in which the temperature is from about 70°C to 90°C and the pressure is from about 300 to 500 mm Hg.

5. A process of any one of claims 1 to 4 in which the polymer is an isobutylene/maleic anhydride copolymer.

6. A process of claim 5 in which the polymer concentration is from about 20% to about 45% in the feed stream.

7. A process of claim 6 in which the polymer concentration in the feed stream is about 40%.

8. A process of any one of claims 1 to 7 in which the deaerated polymer concentration is from about 40% to about 60%.

9. A process for preparing a bubble-free polymeric solution suitable for spinning into fibers, comprising:
   (a) preparing a solution of about 40% of a copolymer of isobutylene/maleic anhydride in water;
   (b) deaerating and concentrating said solution to a concentration of from about 46% to about 54% in a thin film evaporator at a temperature of from about 70°C to about 90°C and a pressure of about 300 to about 500 rnm Hg.

10. A process as claimed in any one of claims 1 to 9 further including the step of forming fibre from the concentrated deaerated solution by extrusion.

11. A shaped article prepared from a polymeric solution obtained by the process claimed in any one of claims 1 to 9.

12. A fiber prepared from a polymeric solution obtained by the process claimed in any one of claims 1 to 9.